# EUROPEAN PATENT SPECIFICATION

(11) **EP 0 473 581 B1**
(45) Date of publication and mention of the grant of the patent: **25.05.1994**
(21) Application number: 90901919.2
(22) Date of filing: 04.01.1990
(51) Int. Cl.: F16B 13/06, F16B 13/14, E04B 1/48

(54) **A PLUG**
PFLUG
CHEVILLE

(30) Priority: 11.01.1989 SE 8900069
(43) Date of publication of application: 11.03.1992
(73) Proprietor: THORSMAN & CO AB, S-611 29 Nyköping (SE)
(72) Inventor: SUNDSTRÖM, Inge, S-611 45 Nyköping (SE)
(74) Representative: Baumbach, Thorkild
(86) International application number: PCT/SE90/00009
(87) International publication number: WO 90/08265

(56) References cited:
- EP-A- 0 092 833
- EP-A- 0 169 335
- DE-C- 2 328 385
- SE-B- 415 055
- US-A- 3 937 122
- US-A- 4 274 324

## Description

The present invention refers to a fastening device in the form of a plug, preferably made of plastic material, having a central, longitudinal hole for cooperation with a fastening element in the form of a screw or equivalent and intended to be arranged in a pro-drilled hole in building components of practically all types from board covered stud walls, light concrete walls, hollow brick walls or brick walls to casted concrete walls which plug comprises, in its fixed condition, an inner end portion in the penetrating hole of which a thread is arranged or measures have been taken in order to facilitate thread cutting, four legs extending from the inner end portion and an outer end portion in which the legs join and which comprises a stop flange or equivalent for bearing on the edge of the hole.

Several different embodiments of such universal plugs for use in hollow walls as well as in walls of solid material are known. In the first mentioned case the plug is put in a through hole in the support and in the latter case in a dead end hole. When the known plugs are arranged in a through hole in a board it is intended that, at the introduction of the cooperating screw in the inner end portion, the plug should be contracted axially and the legs should be bent or broken preferably radially outwards creating a support at the back side of the board. In order to facilitate the bending of the legs the known plugs are as a rule made from a relatively soft plastic material. This means that the part of the plug on the back side of the board will rotate more or less during the introduction of the screw depending on the design of the plug and the material of the same and the legs will position themselves over each other. A plug of such shape is known from the U.S. Patent No. 3.937.122. Plugs of soft material mounted in wall boards of plaster have, however, shown to give less withdrawal resistance than plugs made from hard plastic material which plugs do not tend to rotate as much and bear better on the hole edge. Plugs of a harder material also show a considerable increase of moment indicating when the screw is sufficiently tightened which eliminates the risk of damaging the plug or the edge of the hole.

On plugs of hard plastic material the legs will, however, not be easily bent or broken radially outwards. In order to facilitate the breaking outwards the legs can be provided with bending notches in combination with a slight deviation of the legs. A plug of this kind is known from the European Patent EP-A-0169335. This known plug has two legs which have a central region with a cross-sectional profile formed as an ellipse which becomes a circle toward the outer end and toward the inner end. The small diameter of the ellipse corresponds approximately to the diameter of the drill hole in which the plug is to be inserted. The two legs are separated by a slot which extends from the outer end to the inner end. The slot has an inside width which corresponds to the difference between the large and small diameters of the ellipse at the largest portion of the legs. The legs can thereby be compressed to the diameter of the drill hole.

To facilitate the breaking outwards in the region of the largest portion of the legs, a region of weakened cross-section is formed by a transverse bore running in the plane of the slot. A further region of weakened cross-section is located in the region where the legs merge into the inner end of the plug. This further region of weakened cross-section is formed by two notches extended at right angles to the plane of the slot.

Another plug having two legs arranged between its inner and outer ends is known from the Swedish Patent No. 415055. These legs, which are very weak, are sideways defined by two parallel slots on the outside of which two crack bars are formed between which a wedgeformed inner end is pressed as a cooperating screw is taken up.

A further two leg plug is disclosed in the U.S. Patent No. 4.274.324. Each leg consists of two parts joined together by a side hinge and the inner parts of the legs are at the inner end of the plug joined together by an inner hinge whereby a diamond-shaped collapsible shank is formed. The inner hinge is fitted with a hole for a cooperating screw, a hole having the length of about only one screw thread lead, which makes that the withdrawal resistance does not reach values corresponding to the plugs having regular inner portions, the through holes of which are threaded or provided with internal ridges.

The German Patent No. 2328385 discloses a plug with four legs which plug is injection molded in two connected halfparts having a common longitudinal axis. The parts are folded together and are secured to each other by means of the cooperating screw. The plug is expanded through axial contraction which however often gives insufficient withdrawal resistance in dead end holes.

For use of universal plugs in dead end holes it has also been shown advantageous to make the plug from a relatively hard material which does not have cold flow properties which would cause the plug to lose its grip in the wall as time goes on. The axial contraction of the universal plug is in hard wall materials, however, not sufficient to ensure the grip of the plugs in the wall. The enlarging of the middle portions of the legs shown in said European Patent, EP-A-0169335, gives an essential improvement of the expansion properties of such a plug. The expansion of the plug takes place, however, only in two opposite directions and the withdrawal resistance does not reach values corresponding to the values for known expansion plugs designed for hard wall materials. These plugs are usually divided in four legs by means of radial slots.

The object of the present invention is to provide a universally usable fastening device in the form of a plug by means of which it is possible to achieve with all types of supports values for the withdrawal resistance corresponding values attainable by means of fastening devices especially designed for each type of support. A further object is to provide a plug which by means of its design makes it possible to be produced by injection moulding in an injection tool of the same relatively simple design, with regard to the number of moving parts, which plugs comprising only two legs allow. These objects are attained by giving the plug the characteristics of the following claims.

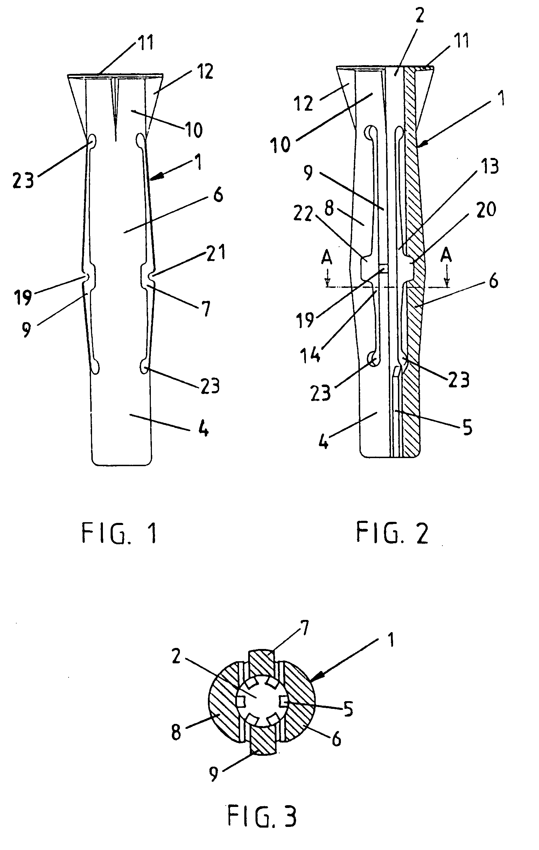

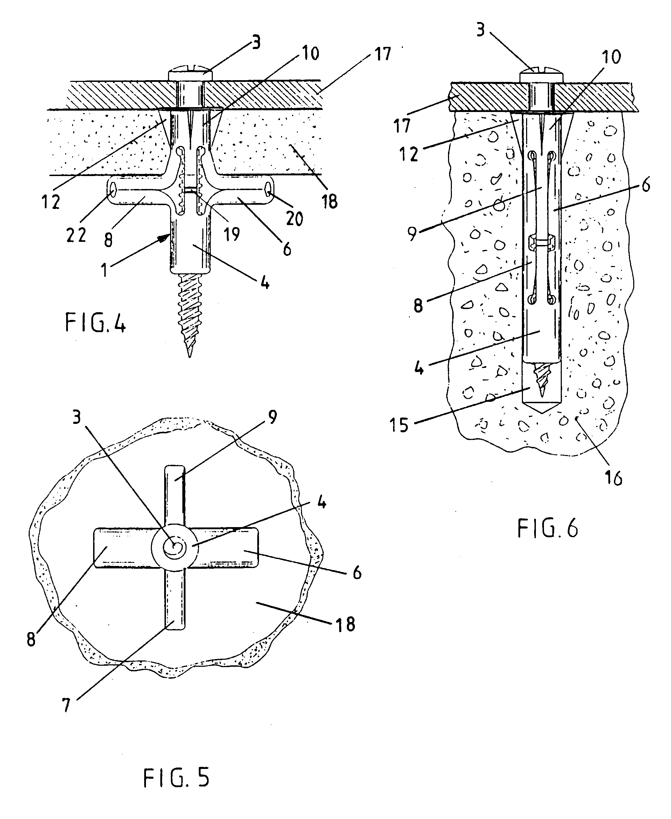

An embodiment of the device will be described more in detail with reference to the accompanying drawing in which figure 1 shows a plug in a side view, figure 2 shows the same plug rotated 90° around its longitudinal axis in a side view and portly sectioned, figure 3 shows a section A-A through the center portion of the plug, figure 4 shows a plug arranged in a sectioned board, figure 5 shows the plug according to figure 4 seen from the back of the board and figure 6 shows a plug arranged in a sectioned, solid building component.

The fastening device according to the invention comprises a plug 1 of preferably plastic material, which is provided with an axially arranged hole 2 adapted for cooperation with a screw 3. The plug 1 comprises, in its fixed condition, an inner end portion 4 in which the through hole 2 is provided with an inner thread or, as shown in figures 2 and 3, internal ridges 5 in which the screw at the introduction in the plug cuts threads. From the inner end portion 4, four legs 6-9 extend which join in an outer end portion 10 which is provided with a flange 11 and means 12 to stop rotation of the plug. The four legs are created by means of two slots 13,14 arranged in essentially parallel planes having an increasing width in the direction of the central part of the plug. The central portions of the legs 6-9 are somewhat divergent and the plug has its largest part in the transverse direction at this central part. Due to the fact that the inner surfaces of the legs 6-9 are limited by the circular hole 2 and thus are straight in axial direction, the legs have also their largest thickness at the center part. Figure 3, which shows a section A-A through the plug, also shows that the design of the outer profile of the legs is such that if the legs are pressed to bear on each other for example by the introduction of the plug in a dead end hole 15, having nominal diameter, in a building component 16, as shown in figure 6, then the center part will have essentially the same diameter as the end portions. Hereby a contraction will be created in the center portion of the hole 2, through which the cooperating screw 3 at the fastening of an object 17 will be screwed creating a wedge effect and the plug will expand and be caused to bear on four sectors of the wall of the hole with considerable force.

At the fastening of an object 17 on a board formed building component according to figures 4 and 5 by means of introducing the cooperating screw 3 in the hole of the inner end portion provided with ridges 5, said end portion is pulled in the direction of the back side of the board 18. Hereby the legs 6-9 are bent or broken radially outwards which is facilitated on one hand by the fact that the legs are somewhat divergent and on the other hand by the fact that the legs are provided with sectional weakenings in the form of notches 19-22 arranged at the center parts of the legs. Of these notches, the notches 20, 22 on the legs 6-8 outside the parallel planes of the slots, turned in the direction of the center hole while the notches 19, 21 on the legs between the planes of the slots 7, 9 are turned in the direction from the center hole. The bending of the legs 6, 8 is further facilitated by the arrangement of sectional weakenings 23 at the ends of the slots.

By means of the design of the plug with four legs which at the application in a board will be broken in four directions a more equal load of the hole edge will be achieved and, compared to known universal plugs, larger capacity to absorb withdrawal forces. Further the arrangement of the slots 13, 14 in two parallel planes and the outward sectional weakening 19 on the legs 7, 9 between the planes of the slots makes it possible to produce the plug by means of injection moulding in an injection tool having few parts moving in relation to each other.

## Claims

1. Fastening device in the form of a plug (1) comprising a central longitudinal hole (2) for cooperation with a screw (3) or equivalent and intended to be arranged in a previously bored hole (15) in building components (16,18) of practically all types from board covered stud walls (18), brick walls or light concrete walls to casted concrete walls (16) which plug (1) comprises, when the plug is mounted, an inner end portion (4) in the penetrating hole (2) of which a thread is arranged or measures have been taken in order to facilitate thread cutting e.g. the arrangement of internal projections (5), four legs (6-9) starting from the inner end portion (4) and an outer end portion (10) in which the legs (6-9) join and which comprises a stop flange (11) or equivalent for bearing on the edge of the hole, **characterised in that** the four legs (6-9) are separated by means of two slots (13,14), penetrating the plug (1), arranged in essentially parallel planes, and designed in such a way that they have an increasing width in the direction of the central part of the plug, that the legs (6-9) each has a thickness increasing from the two end portions (4,10) in the direction of a central portion in such a way that the leg portions, when the plug (1) is not mounted, extend more in the transverse direction than the end portions (4,10) and that the leg portions, when the plug is mounted in a hole (15) with a bottom, having nominal diameter, are squeezed together by the walls of the hole to the diameter of the end portions (4,10), creating a contraction in the axial hole (2) at which contraction the plug (1), when the cooperating screw is introduced, will expand until it bears on four sectors of the wall of the hole (15).

## Patentansprüche

1. Befestigungsvorrichtung in Form eines Dübels (1) der ein längliches Mittelloch (2) zur Zusammenwirkung mit einer Schraube (3) oder Äquivalent aufweist und dafür bestimmt ist, in einem vorgebohrten Loch (15) in fast allen Bauelementarten (16, 18), von Gerippewänden, die auf einer oder beiden Seiten mit Platten bedeckt sind (18), Ziegelwänden, Leichtbetonwänden bis zu Fertigteilbetonwänden (16), angeordnet zu werden, wobei der Dübel (1) bei Einbau des Dübels einen Innenendteil (4) im Durchgangsloch (2), in dem ein Gewinde angeordnet ist, besitzt oder Maßnahmen getroffen worden sind, um das Gewindeschneiden z.B. der Anordnung der Innenrippen (5) zu erleichtern, und vier Schenkel (6-9), die sich vom Innenendteil (4) erstrecken und ein Außenendteil aufweist, in welchem die Schenkel (6-9) zusammenlaufen, und der einen Ahschlagflansch (11) oder Äquivalent zur Auflage auf der Lochkante umfaßt, **dadurch gekennzeichnet**, daß die vier Schenkel (6-9) mittels zweier den Dübel (1) durchdringende Schlitze (15, 16), die in wesentlich parallelen Ebenen angeordnet und so konstruiert sind, daß sie in Richtung zum Mittelteil des Dübels eine erhöhte Breite besitzen, getrennt sind, daß die Schenkel (6-9) jeweils eine Dicke aufweisen, die von den beiden Endteilen (4, 10) in Richtung auf einen Mittelteil derart stärker wird, daß die Schenkelteile sich mehr in Querrichtung erstrecken als die Endteile (4, 10), wenn der Dübel (1) nicht montiert ist, und daß die Schenkelteile, wenn der Dübel in einem Loch (15) mit einem Boden mit Nenndurchmesser montiert ist, durch die Wände des Lochs auf den Durchmesser der Endteile (4, 10) zusammengedrückt werden, wobei eine Kontraktion im Axialloch (2) entsteht, bei welcher Kontraktion sich der Dübel (1), wenn die zusammenwirkende Schraube eingeführt ist, ausdehnt, bis er auf vier Sektoren der Wand des Lochs (15) aufliegt.

## Revendications

1. Dispositif de fixation se présentant sous la forme d'une cheville (1) comprenant un trou central longitudinal (2) destiné à coopérer avec une vis (3) ou équivalent, ce dispositif étant destiné à être monté dans un trou (15) préalablement percé dans des éléments de construction (16, 18) de pratiquement tous les types allant des murs à montants recouverts de panneaux (18), des murs en briques ou des murs en béton léger, jusqu'aux murs en béton coulé (16), cette cheville (1) comprenant, lorsqu'elle est montée, une partie d'extrémité intérieure (4) dans le trou de pénétration (2), partie dans laquelle on a formé un filetage ou pris des mesures pour faciliter le taraudage d'un filetage, comme par exemple la disposition de saillies internes (5), quatre pattes (6 à 9) partant de la partie d'extrémité intérieure (4), et une partie d'extrémité extérieure (10) dans laquelle les pattes (6 à 9) se rejoignent et qui comprend une collerette de butée (11) pour s'appuyer sur le bord du trou, caractérisé en ce que les quatre pattes (6 à 9) sont séparées au moyen de deux fentes (13, 14) pénétrant dans la cheville (1), disposées dans des plans essentiellement parallèles, et conçues de manière à présenter une largeur croissante dans la direction dirigée vers la partie centrale de la cheville, en ce que les pattes (6 à 9) présentent chacune une épaisseur croissante en partant des deux parties d'extrémités (4, 10) pour aller en direction de la partie centrale, de façon que les parties de pattes, lorsque la cheville (1) n'est pas montée, s'étendent plus loin, dans la direction transversale, que les parties d'extrémités (4, 10), et que ces parties de pattes, lorsque la cheville est montée dans un trou borgne (15) de diamètre nominal, soient pressées ensemble par les parois du trou ou diamètre des parties d'extrémités (4, 10), en produisant ainsi le trou axial (2) une contraction pour laquelle la cheville (1) doit se dilater, lorsqu'on introduit la vis associée, jusqu'à venir s'appuyer contre les quatre secteurs de la paroi du trou (15).
